# EUROPEAN PATENT SPECIFICATION

(11) **EP 2 720 947 B1**
(45) Date of publication and mention of the grant of the patent: **12.08.2015**
(21) Application number: 12753815.5
(22) Date of filing: 15.06.2012
(51) Int. Cl.: B64F 1/12

(54) **HOOKING MEMBER FOR FACILITATING LANDING OF AN AIRCRAFT ON AN ACCESS SURFACE**
HAKENVORRICHTUNG ZUR ERLEICHTERUNG DER LANDUNG EINES FLUGZEUGES AUF EINER ZUGANGSFLÄCHE
ORGANE D'ACCROCHAGE DESTINÉ À FACILITER L'ATTERRISSAGE D'UN AÉRONEF SUR UNE SURFACE D'ACCÈS

(30) Priority: 20.06.2011 IT VI20110160
(43) Date of publication of application: 23.04.2014
(73) Proprietor: B. Financial S.r.L., 24067 Sarnico (BG) (IT)
(72) Inventor: BESENZONI, Giovvanni, 24067 Sarnico (BG) (IT)
(74) Representative: Burchielli, Riccardo
(86) International application number: PCT/IT2012/000181
(87) International publication number: WO 2012/176223

(56) References cited:
- WO-A1-91/04910
- GB-A- 923 864
- GB-A- 1 159 323

## Description

The present invention relates to a hooking member for favouring and, especially for a pilot and for any passengers on board, for achieving a safer landing of an aircraft, typically a helicopter, on an access surface, such as for example:
- a self-leveling landing platform installed on a leisure, military or civil security boat,
- a platform of a oil drilling station or of a port quayside,
- a mountain steep and/or slippery ground,
- a frozen ground,
- a ground with frozen snow.

It is well known that aircrafts, especially helicopters, have to reach in certain circumstances access surfaces which, due to their nature and/or to the constructive conception, are rather complicated and uneasy, such as platforms for offshore yachts, military boats platforms or platforms for offshore civil relief, platforms of oil drilling stations, isolated grounds, steep and rugged mountain grounds, frozen grounds and so on.

This approach maneuver is required, for example, if a person should for any reason be taken from or, conversely, down left in this access surface.

It is possible to clearly and immediately understand that, in these cases, the aircraft pilot must have experience and skills to perform safely and effectively the take off and landing maneuvers, just considering that the access surface is uneven, bumpy and/or, more generally, ruggy, unstable, irregular and rough.

Although the ability of the pilot, however, the landing and takeoff maneuvers occurring over the mentioned access surfaces are notoriously rather complicated and tricky in terms of safety, so as to require long implementation times and high caution of the pilot, who therefore must have a high ability.

Moreover, hooking members for facilitating landing of an aircraft on an access surface having the technical features of the preamble of the appended claim 1 are known from GB 1159323 and WO 91/04910; however, said known hooking members have low reliability and maintainability and their operating parts are cumbersome and bulky.

The present invention therefore overcomes the above mentioned drawbacks of the prior art.

In particular, in fact, a first purpose of the present invention is to provide a hooking member for favouring the landing maneuvers of an aircraft on an access surface, making them more safe, practical and effective with respect to the state of the art.

Within this, a further purpose of the invention is to provide a hooking member for favouring the landing of an aircraft on an access surface that is also able to increase, with respect to the prior art, serenity and psychological peace of mind of the pilot and especially of any passengers on board of the aircraft during the landing phase on an irregular and/or unstable access surface.

Another purpose of the present invention is to provide a hooking member, which is able to reduce the time required to effectively perform the landing phase of an aircraft on any access surface.

A further purpose of the present invention is to provide a hooking member for facilitating the landing of an aircraft on an access surface, which can be easily applied to the support pads of the aircraft.

Another purpose of the invention is to provide a hooking member for facilitating the landing phase of an aircraft on an access surface, which requires an occasional and in any case easy maintenance.

The above purposes are achieved by means of a hooking clamping member for favouring the landing of an aircraft on an access surface according to the enclosed claim 1, to which reference is made for sake of brevity.

Further detailed technical characteristics of the hooking member of the invention are also described in the dependent claims.

Advantageously, the hooking member of the invention, once mounted in a suitable way to the support pads of an aircraft, allows the pilot to effectively perform a landing maneuver on an access surface with greater security, speed and ease with respect to what is happen now.

This is due to the presence, in the invention, of a grip assembly which, together with actuating means which control the movement of the operating bodies, allows steady, automatic and substantially immediate coupling and locking of the hooking member to the access surface, thus making easier with respect to the known art the landing maneuvers of the aircraft on said surface.

Still advantageously, the hooking member according to the invention improves the safety conditions of the pilot and/or the passengers during the landing of the aircraft on an access surface.

Equally advantageously, the hooking member of the present invention can be easily installed to the support pads of an aircraft.

Advantageously, moreover, the hooking member allows the pilot and any passengers on board to have peaceful psychological conditions with respect to the prior art during the landing of an aircraft on an access surface, especially when said surface is irregular, unsteady, bumpy and/or slippery.

Further characteristics and technical specifications of the invention will be more clear from the following description, relating to a preferred embodiment of the hooking member claimed herein, which is purely indicative and illustrative, but not limitative, and with reference to the enclosed drawings in which:
- figure 1 is a perspective view of the hooking member of the invention in operative conditions;
- figure 2 is a side view of figure 1;
- figure 3 is a section view of figure 2 taken along the section plane BB;
- figure 4 is a front view of figure 1;
- figure 5 is a section view of figure 4 taken along the section plane AA in a rest position of the operating bodies;
- figure 6 is a section view of figure 4 in an operative condition of the bodies;
- figure 7 is a section view of figure 4 taken along the section plane CC;
- figure 8 is a section view of figure 4 taken along the section plane FF;
- figure 9 is a section view of figure 4 taken along the section plane DD;
- figures 10 and 11 are two different perspective views of the hooking member of figure 1;
- figure 12 is a bottom view of the hooking member of figures 10 and 11;
- figure 13 is a side view of the hooking member of figures 10 and 11;

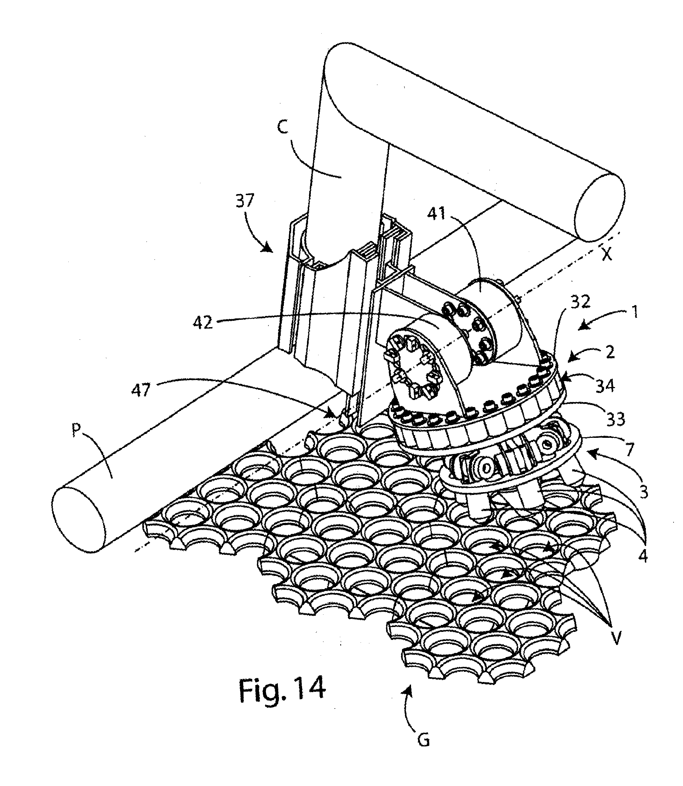

- figures 14, 15 and 16 are three perspective views of the hooking member of figure 1 in use;
- figure 17 is a simplified, partial, cross sectional view of the hooking member of figure 1, according to the use condition of figure 16.

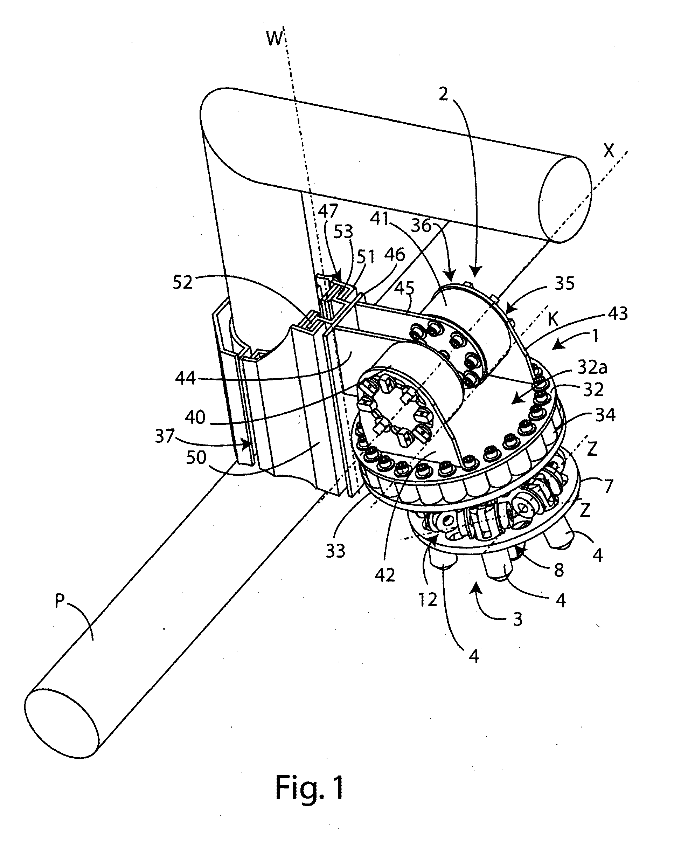

The hooking member of the invention, which is used for favouring the landing of an aircraft, usually a helicopter, on an access surface, is shown in figure 1 where it is generally indicated with 1.

The hooking member 1 includes a support group, generally indicated with 2, which is suitable to be arranged so as to protrude from the support pads P of the aircraft, to which the member 1 is stably and removably coupled.

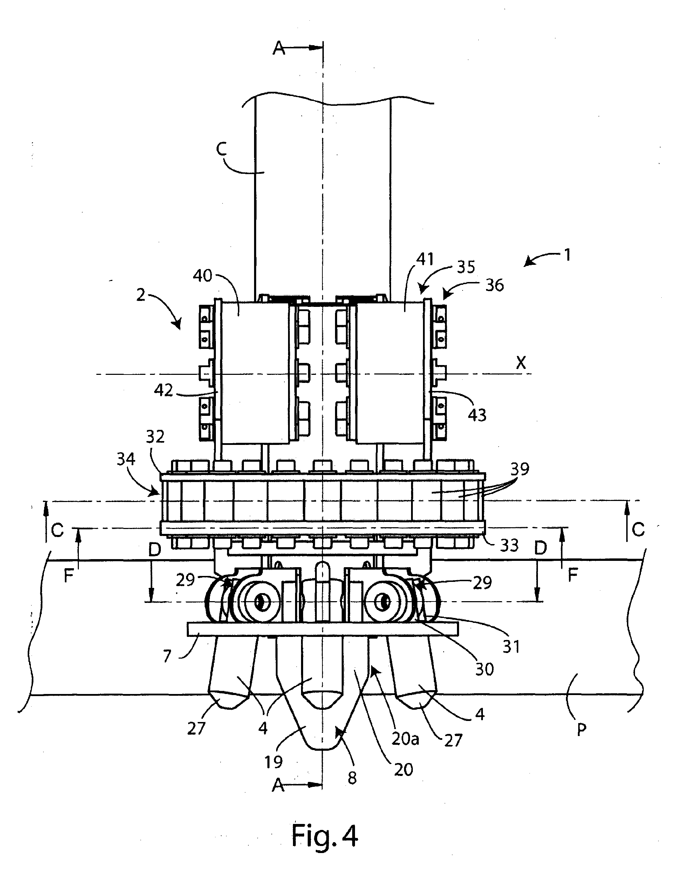

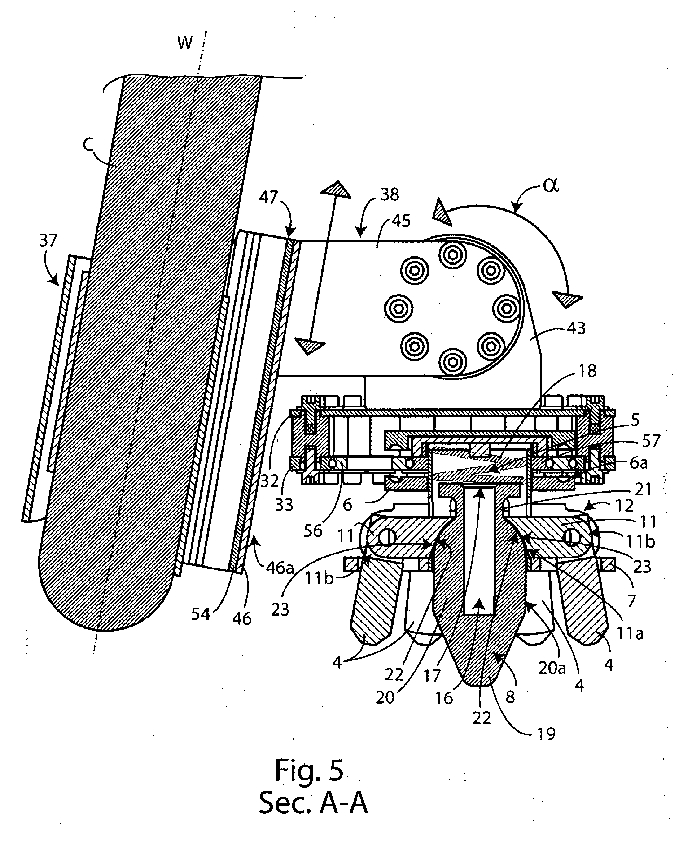

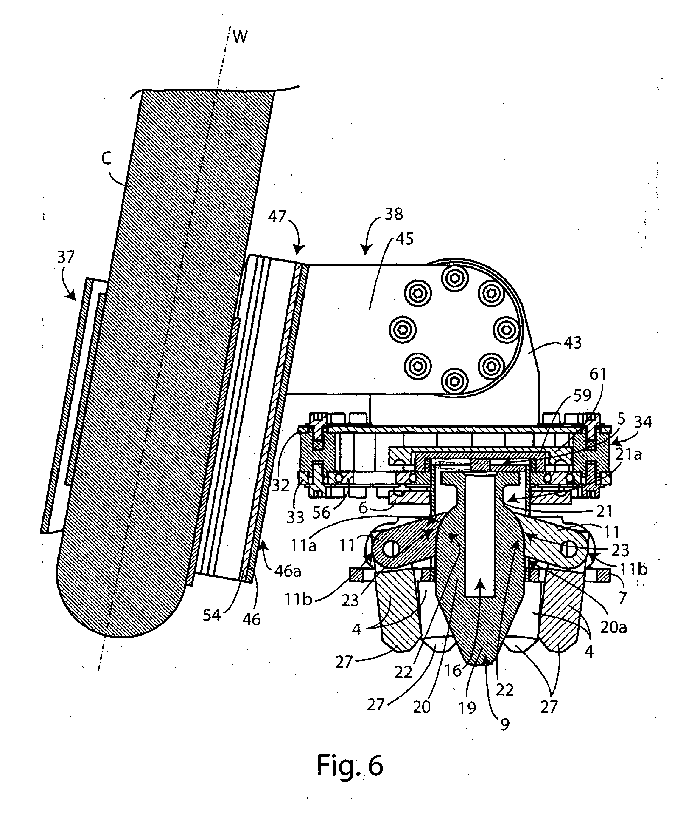

According to the invention, the hooking member 1 includes:
- a grip assembly, generally indicated with 3, which is coupled to the support group 2 and which comprises a plurality of downwards protruding operating bodies 4;
- actuation means, schematically shown in figures 5 and 6 where are generally indicated with 5, which are operatively connected to the bodies 4 of the grip assembly 3 in order to arrange them from/to a rest position (shown in the figures 1 to 5), according to which the operating bodies 4 are freely hanging, to/from an operating position (shown in figure 6), according to which the operating bodies 4 contact the access surface so as to enter at least partially in said access surface, thus being bound to said surface in a stable but removable way and increasing the safety conditions during the landing of the aircraft on said access surface.

In particular, the actuation means 5 bring into rotation the operating bodies 4 about a longitudinal axis of rotation Z to arrange them from/to the rest position to/from the operating position.

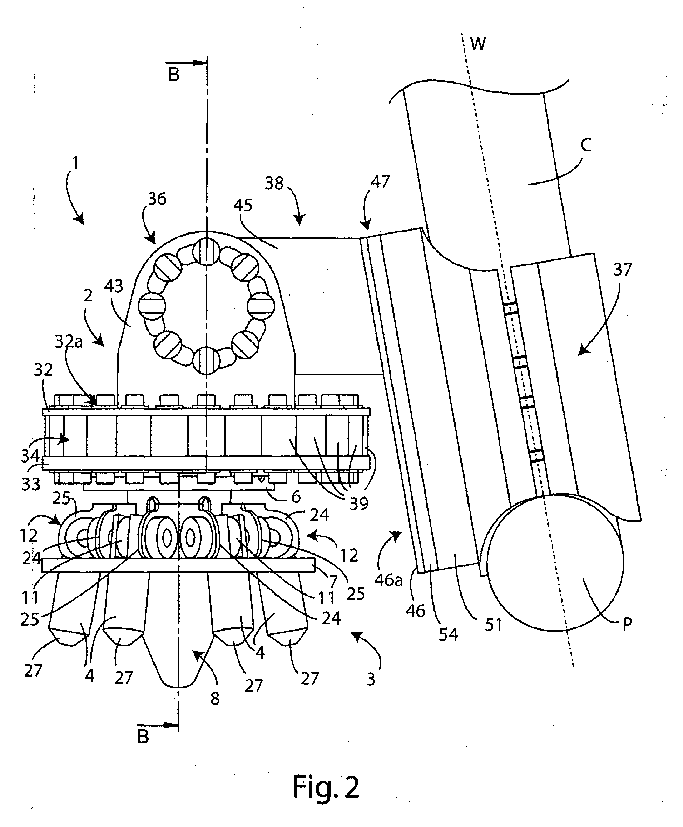

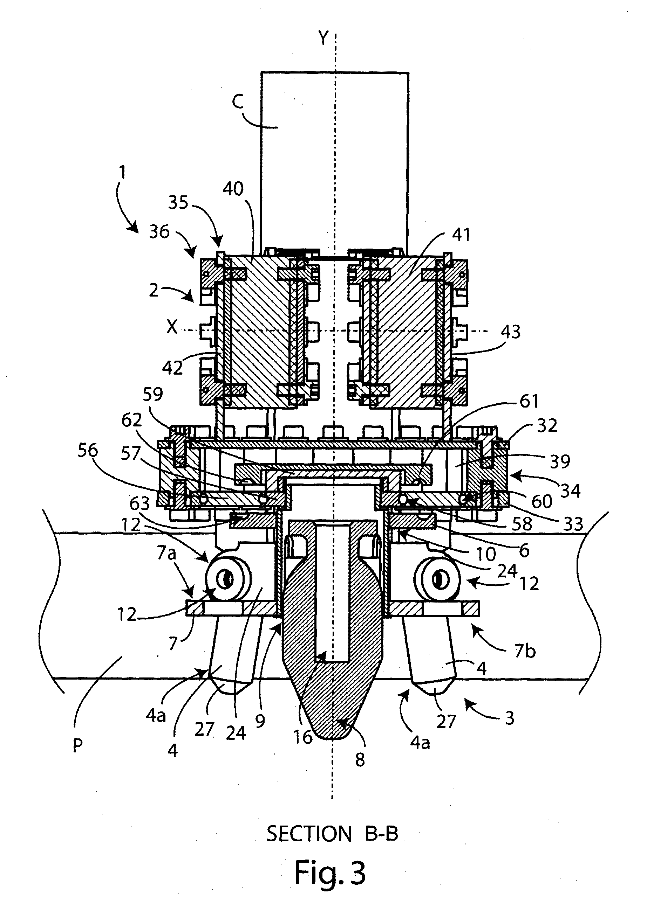

As clearly shown in figures 2 and 3, the grip assembly 3 preferably comprises:
- an abutment plate 6, which is arranged close to and directly facing the support group 2;
- a support plate 7, which is spaced from the abutment plate 6 so that the plates 6, 7 identify different and substantially parallel reference planes;
- a central shaped pin 8, which identifies a longitudinal axis of symmetry Y that is placed orthogonal to the reference planes of said plates 6, 7, said pin 8 passing through a first central through hole 9 of the support plate 7 and downwards projecting from said support plate 7 for any positions of the operating bodies 4 and also passing through a second central through hole 10, which is coaxial with said first central through hole 9 formed in the abutment plate 6;
- a plurality of shaped strips 11, which cooperate on one side with the central shaped pin 8 and on the other side with the operating bodies 4, each strip 11 being coupled to the upper face 7a of the support plate 7 by means of fastening means which are generally indicated with 12.

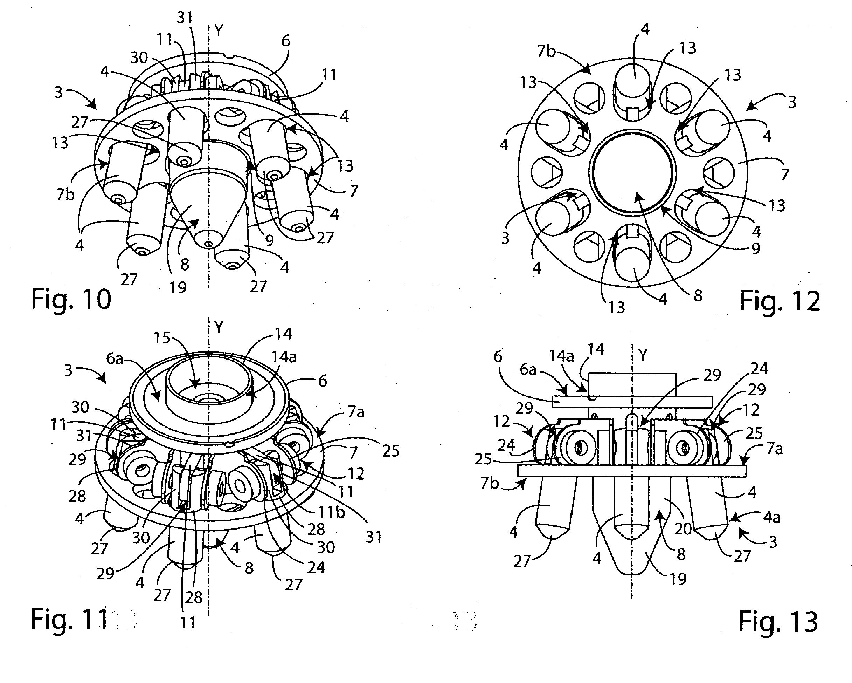

The enclosed figures 10 to 13, to which the following description frequently refer, also show the grip assembly 3 separated from the other components of the hooking member 1 of the invention.

Said figures show that each operating body 4 partially protrudes, in any positions, from the lower face 7b of the support plate 7 by passing through a plurality of peripheral holes 13 that are uniformly provided on the support plate 7.

Moreover, the operating bodies 4 are uniformly positioned on the support plate 7 to which are directly and properly coupled.

We underline that in certain conditions, i.e. when the access surface is, for example, slippery or uneven, each operating body may have a knurled or otherwise processed and/or shaped outer surface, in order to increase the sealing and gripping capability of the body to the structure to which is coupled, even if only provisionally.

Preferably the grip assembly 3 includes a fitting sleeve 14 connecting the plates 6 and 7; specifically, the fitting sleeve 14 is coupled to the support plate 7 in correspondence of the first central through hole 9 and to the abutment plate 6 in correspondence of the second central through hole 10, so that the sleeve 14 is partially inserted in said second through hole 10 and an end portion 14a of the sleeve 14 protrudes from the upper face 6a of the abutment plate 6, as shown in figures 11 and 13.

The actuation means 5 are arranged below and close to the support group 2 and are at least partially contained in the tubular chamber 15 of the fitting sleeve 14, so as to operatively cooperate with the central shaped pin 8 which therefore axially slides.

In the preferred embodiment of the invention, the actuating means 5 are at least partially contained in an axial groove 16, shown in the cross sections of the enclosed figures 3, 5 and 6, which is formed in the central shaped pin 8.

The axial groove 16 has an access mouth 17 facing the tubular chamber 15 of the fitting sleeve 14.

Preferably but not exclusively, the actuation means 5 comprise a helical spring 18 which is compressed when the appendix 19 of the central shaped pin 8 contacts or is released from the access surface (i.e. in a rest position of the operating bodies 4 and when said bodies 4 have reached their final position in order to have a stable coupling of the hooking member 1 with the access surface).

Therefore, the actuation means 5 allows the shaped central pin 8 to slide along the longitudinal axis of symmetry Y when the appendix 19 of the shaped central pin 8 contacts or is released from the access surface.

Advantageously, the shaped central pin 8 has a longitudinal section which substantially corresponds to an inverted and partially pointed Ω, said pin 8 being composed by the appendix 19, by a rounded central portion 20 and by an end portion 21 with a small cross section which is placed on the side opposite to the appendix 19.

The end portion 21 is defined by a side wall 21 a which is joined through a convex portion 22 to the side wall 20a delimiting the rounded central portion 20.

With regard to the above mentioned shaped strips 11, figures 5 and 6 show that each strip 11 has at one first end 11 a concave side edge 23 and at a second end 11b a through opening, not shown in the figures, which identifies a axis coincident with the longitudinal axis of rotation Z.

When the shaped central pin 8 slides along the longitudinal axis of symmetry Y, the convex portion 22 of the lateral surface of the central pin 8 is linked to the concave side edge 23 of each shaped strip 11, thus causing the rotation of the operating bodies 4 about the longitudinal axis of rotation Z and the passage of said operating bodies 4 from/to the rest position to/from the operating position.

Constructively, the shaped strips 11 are provided in a number equal to the operating bodies 4 and to the peripheral through holes 13; in practice, each shaped strip 11 is coupled and cooperates with each operating body 4.

The shaped strips 11 are uniformly distributed about the shaped central pin 8, between the abutment plate 6 and the support plate 7.

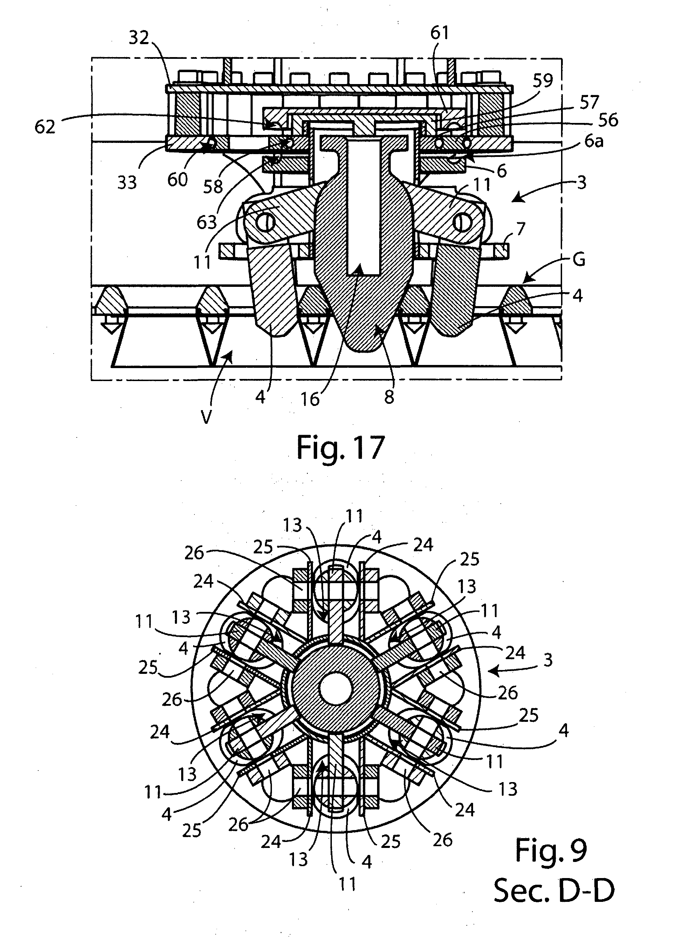

Figure 9 shows that, according to a preferred but not exclusive embodiment of the invention, the fastening means 12 comprise:
- a pair of laminar spaced apart and opposed brackets 24, 25, which are fixed to the upper face 7a of the support plate 7; the laminar brackets 24, 25 have at a first end first coaxial and transverse through holes, not shown in the enclosed figures (one of said first through holes is provided for each laminar bracket 24, 25);
- an auxiliary pin 26, shown in figure 9, which defines the longitudinal axis of rotation Z and is provided with ends inserted in said first coaxial and transverse through holes of the laminar brackets 24, 25.

More in detail, therefore, each operating body 4 includes, at one end 4a, a substantially pointed portion 27, which is suitable to be embedded in the access surface, and, at the opposite end 4b, a fixed portion 28 having a central notch 29 which partially receives the second end 11 b of the shaped strips 11.

In addition, said central notch 29 defines two projecting fins 30, 31, which are opposed and separated in correspondence with said end 4b.

Even the projecting fins 30, 31 have second transverse through holes, not shown in the figures (one of said second through holes is provided for each projecting fin 30, 31): said second through holes are coaxial with each other and are coaxial with said first transverse through holes.

The auxiliary pin 26 is also inserted in said second transverse through holes, so that said operating bodies 4 are integral with the shaped strips 11 and the hub of the auxiliary pin 26 is received in the central notch 29 of the operating bodies 4.

According to the preferred embodiment of the invention described herein, the support group 2 comprises:
- a first supporting plate 32 and a second supporting plate 33, spaced and facing each other and connected to each other by dampening means which are generally indicated with 34;
- rotation means, which are generally indicated with 35 and which are linked to the upper wall 32a of the first supporting plate 32 by means of first anchoring means, which are generally indicated with 36;
- a clamping terminal 37, which, as shown in figure 1, is directly applied externally to the support pad P of the aircraft and which is coupled to the rotation means 35 through second anchoring means, which are generally indicated with 38.

More exactly, the second supporting plate 33 is arranged above and in front of the abutment plate 6 of the grip assembly 3.

Preferably but not necessarily, the dampening means 34 comprise a plurality of strain-guards columns 39, which are coated with rubber material and which are uniformly provided along a peripheral annular portion of the supporting plates 32, 33 to which are firmly fixed through known fixing means.

The strain-guards columns 39 are able to absorb sudden shots coming from above, according to a vertical or tilted direction, which are directed against the first supporting plate 32 of the support group 2, or coming from below, which are directed against the operating bodies 4, the shaped central pin 8 and the support plate 7 of the grip assembly 3.

With reference to the rotation means 35, figures 1, 3 and 4 show that said means include a pair of transverse shock-absorbing pins 40, 41 having a common linear axis of rotation X, which is orthogonal to the longitudinal axis of symmetry Y and which is placed in correspondence of a symmetry axis K of the first supporting plate 32; the transverse shock-absorbing pins 40, 41 are however spaced from the first support plate 32.

Each of said transverse shock-absorbing pin 40, 41 is made of rubbery material to absorb sudden shots suffered laterally by the support assembly 2 and/or by the grip assembly 3.

The shock-absorbing transverse pins 40, 41 allow the support group 2 and consequently the grip assembly 3 to perform angles of rotation a about the axis of rotation X which are typically, but not limited to, equal to a value not exceeding 15°.

In other embodiments of the hooking member of the present invention (not shown in the enclosed figures), the support group 2 may also include a single transverse shock-absorbing pin or a number of transverse shock-absorbing pins greater than two.

The shock-absorbing transverse pins 40, 41 are coupled to the first anchoring means 36 by means of support and guide mechanical devices (not shown in the enclosed figures), such as rolling bearings.

Preferably, the first anchoring means 36 include a pair of lateral brackets 42, 43 protruding from the upper wall 32a of the first supporting plate 32; each lateral bracket 42, 43 supports one end of the respective shock-absorbing transverse pin 40, 41.

The second anchoring means 38 comprise, in turn, two intermediate brackets 44, 45 and one end of each intermediate bracket is fixed to the respective shock-absorbing transverse pin 40, 41.

The second anchoring means 38 also include a front plate 46 coupled to the clamping terminal 37 and provided with an outer face 46a to which the intermediate brackets 44, 45 are made integral through known connecting means, such as for example welding points or joints, which are applied between the side edge of the intermediate brackets 44, 45 and said outer face 46a so that the faces of the intermediate brackets 44, 45 identify a respective plane perpendicular to the plane defined by the face of the front plate 46.

As mentioned regarding the lateral brackets, also the intermediate brackets can be provided in a prefixed number (one or more), according to further embodiments (not shown in the enclosed figures) of the hooking member of the invention, said prefixed number varying on the basis of the design choices.

As shown in figures 1, 7 and 8, the front plate 46 is advantageously coupled to the clamping terminal 37 by means of sliding means, which are generally indicated with 47, able to allow the axial movement of the support group 2 and consequently of the grip assembly 3 along a linear axis W defined by the column or connecting leg C of the support pads P of the aircraft.

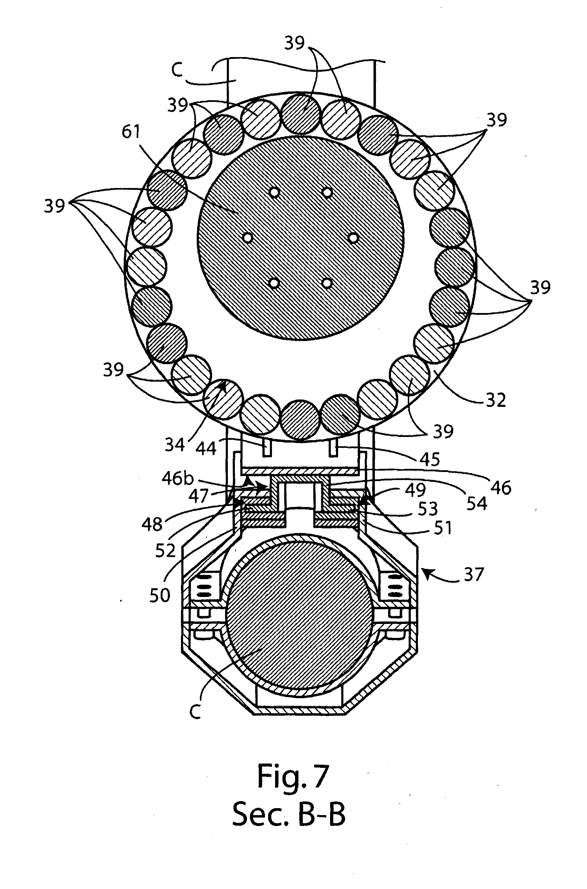

In a preferred but not-limiting way, the sliding means 47 comprise a pair of linear seats 48, 49, obtained in two lateral shoulders 50, 51, which are opposite and spaced apart, of the clamping terminal 37, and two corresponding linear skidding tags 52, 53, which are mutually opposite and which protrude laterally from a shaped counterplate 54, that is integral with the inner face 46b of the front plate 46 (see figure 7).

The hooking member 1 comprises, in addition, contrast means, not shown in the enclosed figures and comprising for example one or more coil springs, which are coupled to the clamping terminal 37 and which cooperate with the sliding means 47 to prevent separation of the support group 2 from the clamping terminal 37 and to define a stop end along the linear axis W.

Advantageously, the hooking member 1 includes self-centering position means, generally indicated with 55 and shown in the figures 3 and from 5 to 8, which are arranged above the grip assembly 3 and which are firmly coupled to said grip assembly 3, in order to allow the grip assembly 3 to quickly adapt its structure to the structure of the access surface with which the grip assembly 3 is in contact and on which the aircraft lands, thus extremely increasing the safety conditions during the landing phase of the aircraft.

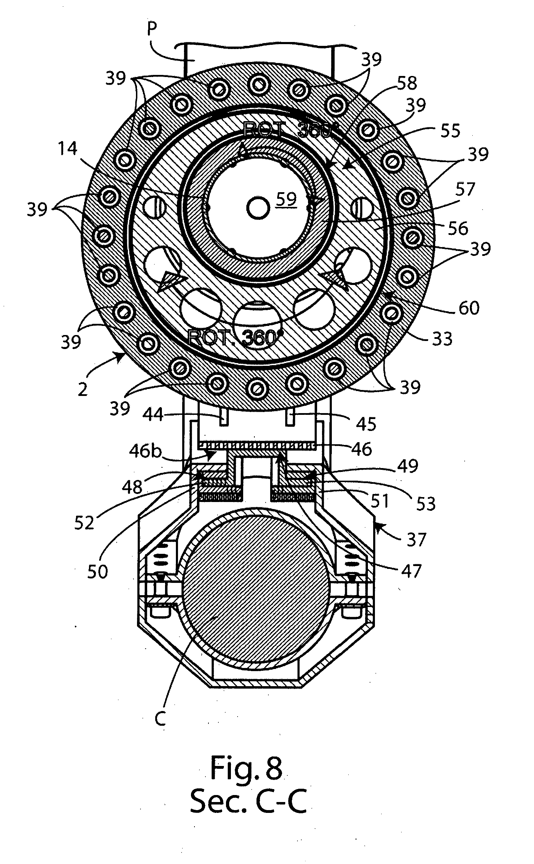

More exactly, the self-centering position means 55 comprise a planetary mechanical structure, as clearly shown in figure 8, which includes two idle coplanar disks 56, 57 having different rotation centers, so that said disks 56, 57 freely rotate, one independently from the other.

The idle disks 56, 57 are also located above the abutment plate 6 and they are separated from each other by an annular seat 58, in which first rolling means (not shown in the figures and consisting in balls o spheres freely rotating in the space) are housed.

In particular, the central disk 57 of the planetary mechanical structure is provided with a shaped cover 59 that closes the top of the coupling sleeve 14 and is provided with a bottom wall against which the actuation means 5 counteract.

In addition, an annular groove 60 is also provided between the peripheral disk 56 and the second plate 33 of the support group 2 and rolling auxiliary means, not shown in the figures and of the type of the first rolling means that are housed in the annular seat 58, are housed in said groove 60.

Preferably, the self-centering position means 55 also comprise a reinforcement and/or protection cover 61, which is coupled above the shaped cover 59 of the central disk 57 and which is interposed between the supporting plates 32, 33 of the support group 2.

In other embodiments of the hooking member of the invention, not shown in the enclosed figures, the self-centering position means may comprise a number of idle disks different from two, depending on the application requirements and/or on the design choices.

The hooking member 1 also comprises second rolling means, which are interposed between the reinforcement and protection cover 61 and one of the idle disks (in this case the peripheral idle disk indicated with 56) of the planetary mechanical structure.

The second rolling means are partially housed in a first annular recess 62 formed in the lower surface of the reinforcement and protection cover 61 and are also arranged close to the upper surface of said peripheral idle disk 56.

It is obvious that other embodiments of the hooking member of the present invention (not shown in the enclosed figures) may also be provided, according to which the second rolling means are housed in a plurality of first annular recesses formed in the lower surface of the reinforcement and protection cover.

The hooking member 1 also comprises third rolling means which are interposed between the peripheral idle disk 56 of the planetary mechanical structure and the abutment plate 6 of the grip assembly 3 and which are partially housed in a second annular recess 63 formed in the upper face 6a of the abutment plate 6 of the grip assembly 3.

Similarly to the second rolling means, the third rolling means are arranged close to the lower surface of one of the idle disks and in particular of the peripheral disk indicated with 56.

What has just been said about the second rolling means also applies to the third rolling means, namely that in other embodiments of the hooking member of the invention, not shown in the enclosed figures, said third rolling means may be housed in a plurality of second annular grooves formed in the upper face of the abutment plate 6 of the grip assembly 3.

Also advantageously, the hooking member 1 of the invention includes quick release means, not shown in the enclosed figures, which are associated with the support group 2.

Said quick release means allow, if necessary, a quick separation of the support group 2 and consequently a quick separation of the grip assembly 3 from the support pads P of the aircraft.

For example, the quick release means can be interposed between the rotating means 35 and the clamping terminal 37 of the support group 2 and can be actuated by the operator by means of wires or cables inserted into suitable projecting eyelets of said release means.

More in detail, said quick release means may include elastic means, such as a plurality of springs, and a pair of intermediate plates, maintained in a compressed state by said elastic means and able to cooperate with a pair of wedges that block the support group 2 and the combined grip assembly 3.

Inserting a cable into a first projecting eyelet and exerting a traction on the cable, the two plates expand, while inserting a cable into the second protruding eyelet and exerting a traction even on said cable, the wedges are drawn at the base, causing the moving towards the outside and the widening of the intermediate plates, as well as the removal of the two wedges; in this condition, part of the support group 2 is dropped by the components which are coupled to the connecting leg C of the support pads P of the aircraft.

In practice, the aircraft, usually a helicopter, equipped with a series of hooking members 1 installed through the clamping terminal 37 on the support pads P, approaches the access surface on which it lands, such as an self-leveling platform of a boat.

In this case, such a self-leveling platform will be conveniently of the type illustrated in figures from 14 to 16, consisting at least in part (e.g. in a surface that is near the well-known symbol "H", which indicates the landing area) by an alveolar grid G, in which each cavity V has a conical section in order to allow the operating bodies 4 of the grip assembly 3 of the hooking member 1 of the invention to tilt and engage effectively and speedily to said alveolar grid G.

In fact, as soon as the grip assembly 3 is approaching the access surface G, the shaped central pin 8, which protrudes from the lower face 7b of the support plate 7 to a greater extent than the operating bodies 4, interferes firstly with the access surface A and, under the weight of the helicopter, compresses the helical spring 18 of the actuation means 5 in order to prepare its ascent along the longitudinal axis of symmetry Y.

The coupling of the convex portion 22 of the lateral surface of the shaped central pin 8 with the concave side edge 23 of the shaped strips 11 allows said shaped strips 11 to linearly move and said operating bodies 4 to rotate about their respective longitudinal axes Z of rotation defined by the auxiliary pins 26, until the operating bodies 4 engage with the necessary precision in the corresponding cavities V of the alveolar grid G.

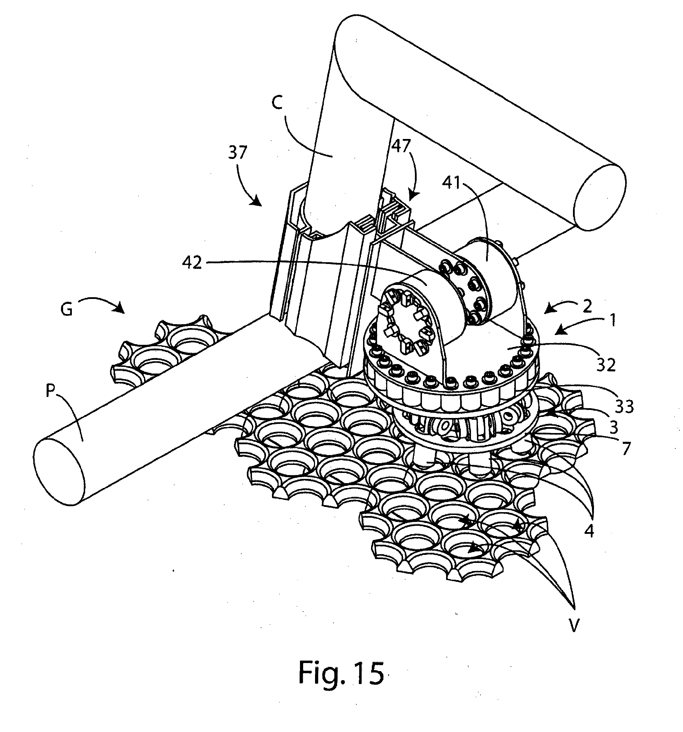

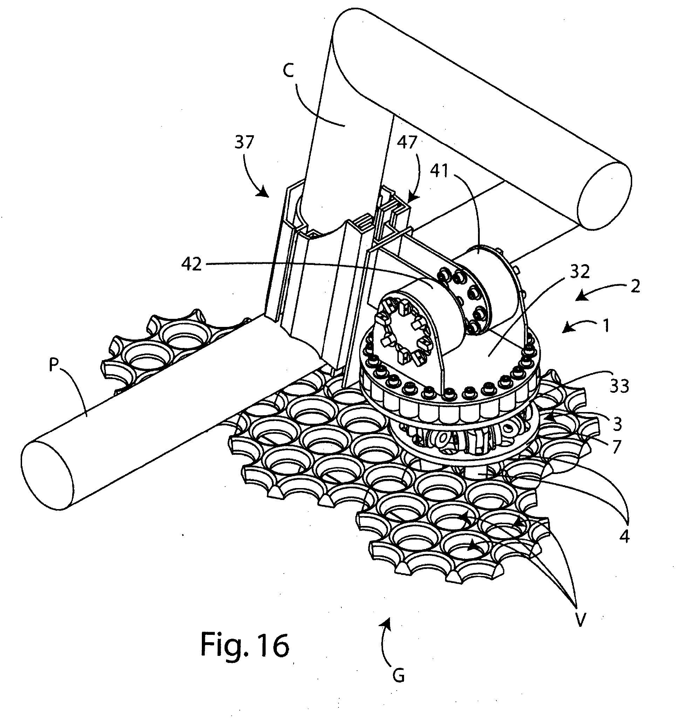

If, as a result of said movements, the pilot of the helicopter is unable to correctly and effectively enter the operating bodies 4 in the respective cavities V, the free rotation of the idle disks 56 and 57 of the planetary mechanical structure of the self-centering positioning means 55 allows to vary quickly and automatically the position of the entire grip assembly 3 and, in particular, of the operating bodies 4 of said grip assembly 3, until they find the correct path to fit in the cavities V of the underlying alveolar grid G, according to what is shown in the enclosed figures 15 and 16.

The automatic position adjustment of the grip assembly 3, with respect to the underlying access surface G, is also guaranteed by the rotation means 35 and by the sliding means 47 along the linear axis W, both belonging to the support group 2; said figures 15 and 16 show the different axial position of the sliding means 47 along said linear axis W and therefore the relative adjustment.

The hooking member 1 of the invention takes the operating position shown in figures 16 and 17 when the operating bodies 4 have finally reached the above mentioned correct operating position.

In this position, the coil spring 18 of the actuation means 5 is released so that said spring 18 pushes the shaped central pin 8 downwards along the longitudinal axis of symmetry Y, up to arrange it in a position of maximum projection from the plate 7 and to engage it in a corresponding cavity V of the alveolar grid G.

On the basis of the above description, it is understood therefore that the hooking member for favouring the landing of an aircraft on a access surface, which is the object of the present invention, achieves the objects and realizes the advantages previously mentioned, considering thatsaid hooking member is a kind of mechanical claw able to increase the safety for the driver and any passengers on board during the landing phase.

The movement of the parts of the hooking member of the invention, namely
- the sliding along the longitudinal axis of symmetry Y,
- the rotation about the longitudinal axis Z,
- the free rotation of a planetary mechanical structure around a plurality of rotation centers,
- the rotation about the linear axis X,
- the sliding along the linear axis W,
allow to obtain a quick and effective landing maneuver by the pilot of the aircraft on any access structure, even if said structure is impassable, steep, slippery, unstable and/or uneven.

Upon implementation, changes may be made to the hooking member of the invention consisting, for example, in a support group having a different shape with respect to the support group described above and shown in the enclosed drawings.

In addition, in other constructive solutions of the hooking member of the invention (not shown), the grip assembly may have a different structure with respect to the structure described in the preferred embodiment of the invention; in particular, the operating bodies (a kind of claws) may have a different structure with respect to the structure shown in the enclosed figures.

Moreover, in further embodiments of the claimed hooking member (not shown), the actuating means may be of another type than the mechanical type already described, and include for example, hydraulic or pneumatic pistons, electric motors, gas springs and so on, operated by a central processing and control unit belonging to a control panel available to the operator (in particular, the pilot of the aircraft).

It should be also noted that an aircraft, in particular a helicopter, may comprise hooking members of the type claimed in the present invention in a number equal to two or three for each support pad and therefore the aircraft may have a total of four or six hooking members.

Finally, it is clear that other variants can be made to the hooking member of the invention, without departing from the principles of novelty inherent in the inventive idea, and it is also clear that in the practical actuation of the invention, the materials, the shapes and the dimensions of the technical details that are shown may be any according to the requirements and can be replaced with other details that are technically equivalent.

Where the construction features and techniques mentioned in the following claims are followed by reference numerals or signs, those reference signs have been introduced with the sole purpose of increasing the intelligibility of the claims themselves, and, accordingly, they do not have any limiting effect on the interpretation of each element identified, by way purely of example, by said reference signs.

## Claims

1. Hooking member (1) for facilitating landing of an aircraft on an access surface (G) comprising a support group (2) suitable to be placed projecting from the support pads (P) of said aircraft with which is coupled, wherein said hooking member (1) includes:
- a grip assembly (3), coupled with said support group (2), which comprises a plurality of operative bodies (4) protruding and oriented downwardly, an abutment plate (6) placed close to and facing said support group (2), a support plate (7) spaced apart from said abutment plate (6), so that said plates (6, 7) define reference planes distinct and parallel each other; a shaped central pin (8) defining a longitudinal symmetry axis (Y) orthogonal to said reference planes of said plates (6, 7) and passing through a first central through hole (9), made in said support plate (7), from which it remains inferiorly projecting in any position taken by said operative bodies (4), and through a second central through hole (10), made in said abutment plate (6) and coaxial to said first through hole (9), and a plurality of shaped strips (11) cooperating at one side with said shaped central pin (8);
- actuation means (5), operatively connected with said operative bodies (4) of said grip assembly (3), in order to place them from/to a rest position to/from an operating position in which said operative bodies (4) interfere with said access surfaces (G), in such a way to at least partly penetrate into said access surface (G) and be firmly but removably bounded to said access surface (G), thereby increasing the safety conditions during landing of said aircraft on said access surface (G), **characterised in that** each shaped strip (11) is pivotably coupled at the other side to one of said operative bodies (4) and to the upper face (7a) of said support plate (7) through fastening means (12), and **in that** said operative bodies (4) remain freely hanging in said rest position.

2. Hooking member (1) according to claim 1 **characterized in that** said actuation means (5) are configured to put in rotation said operative bodies (4) around a longitudinal rotation axis (Z) in order to place them from/to said rest position to/from said operating position.

3. Hooking member (1) according to claim 1, **characterized in that** each of said operative bodies (4) partially protrudes in any position from the lower face (7b) of said support plate (7) by passing through a plurality of peripheral through holes (13) made in said support plate (7).

4. Hooking member (1) according to claim 1, **characterized in that** said grip assembly (3) includes a connecting sleeve (14) which connects said abutment plate (6) with said support plate (7), coupled with said support plate (7) at said first central through hole (9) and said abutment plate (6) at said second central through hole (10) so as to be partly inserted into said second central through hole (10) and protrude for a terminal stretch (15a) from the upper face (6a) of said abutment plate (6).

5. Hooking member (1) according to claim 4, **characterized in that** said actuation means (5) are placed inferiorly close to said support group (2) and they are at least partly contained in the tubular chamber (15) of said connecting sleeve (14) and cooperate with said shaped central pin (8) making it axially sliding.

6. Hooking member (1) according to claim 5, **characterized in that** said actuation means (5) are at least partly container in an axial slot (16) made in said shaped central pin (8) having an inlet (17) facing said tubular chamber (15) of said connecting sleeve (14).

7. Hooking member (1) according to at least one of the claims from 1 to 6, **characterized in that** said actuation means (5) comprise a coil or helical spring (18) which takes the release condition at least in said rest position of said operative bodies (4) and compresses when the free appendix (19) of said shaped central pin (8) comes into contact with or trips from said access surface (G).

8. Hooking member (1) according to claims 6 or 7, **characterized in that** said shaped central pin (8) has in longitudinal section a profile substantially in the shaped of overturned and partly sharpened Ω, being composed of said free appendix (19), a crowned central portion (20) and an end portion (21) having reduced transverse section, opposite to said free appendix (19) and delimited by side wall (21 a) connected by means of a convex stretch (22) with the lateral wall (20a) delimiting said crowned central portion (20).

9. Hooking member (1) according to at least one of the claims from 1 to 8, **characterized in that** each of said shaped strips (11) has at a first end (11 a) a concave side edge (23) and at a second end (11 b) a through opening defining an axis coincident with said rotation longitudinal axis (Z).

10. Hooking member (1) according to one of the claims from 1 to 9, **characterized in that** said shaped strips (11) are equal in number to said operative bodies (4), one for each of said operative bodies (4) with which is coupled and cooperates, and uniformly distributed around said shaped central pin (8) between said abutment plate (6) and said support plate (7).

11. Hooking member (1) according to at least one of the claims from 1 to 10, **characterized in that** said fastening means (12) comprise :
- a pair of laminar brackets (24, 25) opposite and spaced apart each other, fixed to said upper face (7a) of said support plate (7), having at a first end one or more first transverse through holes coaxial each other;
- at least one auxiliary pin (26) defining said longitudinal rotation axis (Z) and provided with ends inserted into said first transverse coaxial through holes of said laminar brackets (24,25).

12. Hooking member (1) according to claim 11, **characterized in that** each of said operative bodies (4) include at an end (4a) a substantially pointed portion (27), suitable to be driver into said access surface, and at the opposite end (4b) a bound portion (28) having a central groove (29) which partially receives said second end (11 b) of said shaped strips (11) and defines two projecting wings (30, 31) opposite and spaced apart each other.

13. Hooking member (1) according to claim 12, **characterized in that** said projecting wings (30, 31) have one or more second transverse through holes, coaxial to said first transverse through holes and into which said auxiliary pin (26) is inserted, making said operative bodies (4) integral to said shaped strips (11), in such a way that the hub of said auxiliary pin (26) is housed in said central groove (29).

14. Hooking member (1) according to at least one of the claims from 2 to 13, **characterized in that** said support group (2) comprises:
- a first (32) and a second bearing plate (33) facing and spaced apart each other, mutually connected through shock absorbing means (34);
- rotation means (35), bound to upper wall (32a) of said first bearing plate (32) through first anchoring means (36);
- a clamping terminal (37), suitable to be externally applied to said support pad (P) of said aircraft and coupled with said rotation means (35) through second anchoring means (38).

15. Hooking member (1) according to at least one of the claims from 1 to 14, **characterized in that** it comprises self-centering positioning means (55), placed above said grip assembly (3) with which are firmly coupled, suitable to allow said grip assembly (3) to quickly adapt to the configuration of said access surface (G) with which it comes into contact, contributing to increase the safety conditions during landing of said aircraft on said access surface (G), said self-centering positioning means (55) comprising a epicycloidal or planetary mechanical structure consisting of a plurality of mutually coplanar idle disks (56, 57), having rotation centres distinct each other in order to rotate one independently from the other, placed above said abutment plate (6) and spaced apart each other by an annular seat (58) into which first freely rolling means are housed.

## Patentansprüche

1. Einhakbauteil (1) zum Erleichtern der Landung eines Luftfahrzeugs auf einer Zugangsfläche (G), das eine Stützgruppe (2) aufweist, die geeignet ist, von den Stützauflagen (P) des Luftfahrzeugs, mit denen sie gekoppelt ist, vorstehend platziert zu sein, wobei das Einhakbauteil (1) aufweist:
eine mit der Stützgruppe (2) gekoppelte Greifanordnung (3), die aufweist: mehrere Wirkkörper (4), die nach unten vorragen und orientiert sind, eine Stoßplatte (6), die nahe der Stützgruppe (2) platziert ist und zu ihr weist, eine Stützplatte (7), die von der Stoßplatte (6) beabstandet ist, so dass die Platten (6, 7) Referenzebenen festlegen, die sich unterscheiden und parallel zueinander sind; einen geformten Mittenzapfen (8), der eine Längssymmetrieachse (Y) senkrecht zu den Referenzebenen der Platten (6, 7) festlegt und durch ein in der Stützplatte (7) gebildetes erstes Mittendurchgangsloch (9) geführt ist, aus dem er in jeder von den Wirkkörpern (4) eingenommenen Position nach unten vorstehend bleibt, sowie ein in der Stoßplatte (6) und koaxial mit dem ersten Durchgangsloch (9) gebildetes zweites Mittendurchgangsloch (10) durchläuft, sowie mehrere geformte Streifen (11), die an einer Seite mit dem geformten Mittenzapfen (8) zusammenwirken;
Betätigungseinrichtungen (5), die mit den Wirkkörpern (4) der Greifanordnung (3) betrieblich verbunden sind, um sie aus einer Ruheposition in eine Wirkposition und umgekehrt zu platzieren, in der die Wirkkörper (4) in die Zugangsflächen (G) so eingreifen, dass sie mindestens teilweise in die Zugangsfläche (G) eindringen und mit der Zugangsfläche (G) fest, aber entfernbar verbunden sind, was die Sicherheitsbedingungen beim Landen des Luftfahrzeugs auf der Zugangsfläche verstärkt, **dadurch gekennzeichnet, dass** jeder geformte Streifen (11) an der anderen Seite mit einem der Wirkkörper (4) und mit der Oberseite (7a) der Stützplatte (7) über eine Befestigungseinrichtung (12) schwenkbar gekoppelt ist, und dadurch, dass die Wirkkörper (4) in der Ruheposition frei hängen bleiben.

2. Einhakbauteil (1) nach Anspruch 1, **dadurch gekennzeichnet, dass** die Betätigungseinrichtungen (4) so konfiguriert sind, dass sie die Wirkkörper (4) um eine Längsdrehachse (Z) in Drehung versetzen, um sie aus der Ruheposition in die Wirkposition und umgekehrt zu platzieren.

3. Einhakbauteil (1) nach Anspruch 1, **dadurch gekennzeichnet, dass** jeder der Wirkkörper (4) in jeder Position von der Unterseite (7b) der Stützplatte (7) teilweise vorragt, indem mehrere periphere Durchgangslöcher (13) durchlaufen werden, die in der Stützplatte (7) gebildet sind.

4. Einhakbauteil (1) nach Anspruch 1, **dadurch gekennzeichnet, dass** die Greifanordnung (3) eine die Stoßplatte (6) mit der Stützplatte (7) verbindende Verbindungshülse (14) aufweist, die mit der Stützplatte (7) am ersten Mittendurchgangsloch (9) und der Stoßplatte (6) am zweiten Mittendurchgangsloch (10) so gekoppelt ist, dass sie teilweise in das zweite Mittendurchgangsloch (10) eingefügt ist und mit einer Endausdehnung von der Oberseite (6a) der Stoßplatte (6) vorragt.

5. Einhakbauteil (1) nach Anspruch 4, **dadurch gekennzeichnet, dass** die Betätigungseinrichtungen (5) nahe der Stützgruppe (2) nach unten platziert und sie mindestens teilweise in der röhrenförmigen Kammer (15) der Verbindungshülse (14) enthalten sind sowie mit dem geformten Mittenzapfen (8) zusammenwirken, wobei sie ihn axial gleiten lassen.

6. Einhakbauteil (1) nach Anspruch 5, **dadurch gekennzeichnet, dass** die Betätigungseinrichtungen (5) mindestens teilweise in einem im geformten Mittenzapfen (8) gebildeten Axialschlitz (16) enthalten sind, der einen Einlass (17) hat, der zur röhrenförmigen Kammer (15) der Verbindungshülse (14) weist.

7. Einhakbauteil (1) nach einem der Ansprüche 1 bis 6, **dadurch gekennzeichnet, dass** die Betätigungseinrichtungen (5) eine Schrauben- oder Spiralfeder (18) aufweisen, die den Freigabezustand mindestens in der Ruheposition der Wirkkörper (4) einnimmt und sich zusammendrückt, wenn der freie Ansatz (19) des geformten Mittenzapfens (8) mit der Zugangsfläche (G) in Kontakt kommt oder davon abrutscht.

8. Einhakbauteil (1) nach Anspruch 6 oder 7, **dadurch gekennzeichnet, dass** der geformte Mittenzapfen (8) im Längsschnitt ein Profil hat, das im Wesentlichen die Form eines umgekehrten und teilweise zugespitzten Ω hat, wobei er sich aus dem freien Ansatz (19), einem balligen Mittenabschnitt (20) und einem Endabschnitt (21) mit reduziertem Querschnitt zusammensetzt, der entgegengesetzt zum freien Ansatz (19) liegt und durch eine Seitenwand (21a) begrenzt ist, die mit Hilfe einer konvexen Ausdehnung (22) mit der Seitenwand (20a) verbunden ist, die den balligen Mittenabschnitt (20) begrenzt.

9. Einhakbauteil (1) nach einem der Ansprüche 1 bis 8, **dadurch gekennzeichnet, dass** jeder der geformten Streifen (11) an einem ersten Ende (11a) eine konkave Seitenkante (23) und an einem zweiten Ende (11b) eine Durchgangsöffnung hat, die eine mit der Drehlängsachse (Z) zusammenfallende Achse festlegt.

10. Einhakbauteil (1) nach einem der Ansprüche 1 bis 9, **dadurch gekennzeichnet, dass** die geformten Streifen (11) in gleicher Anzahl wie die Wirkkörper (4), einer für jeden der Wirkkörper (4), mit dem er gekoppelt ist und zusammenwirkt, vorhanden sind und um den geformten Mittenzapfen (8) zwischen der Stoßplatte (6) und der Stützplatte (7) gleichmäßig verteilt sind.

11. Einhakbauteil (1) nach einem der Ansprüche 1 bis 10, **dadurch gekennzeichnet, dass** die Befestigungseinrichtung (12) aufweist:
ein Paar entgegengesetzte und voneinander beabstandete lamellenförmige Halterungen (24, 25), die an der Oberseite (7a) der Stützplatte (7) befestigt sind und an einem ersten Ende ein oder mehrere erste Querdurchgangslöcher haben, die koaxial miteinander sind;
mindestens einen Hilfszapfen (26), der die Längsdrehachse (Z) festlegt und mit Enden versehen ist, die in die ersten koaxialen Querdurchgangslöcher der lamellenförmigen Halterungen (24, 25) eingefügt sind.

12. Einhakbauteil (1) nach Anspruch 11, **dadurch gekennzeichnet, dass** jeder der Wirkkörper (4) aufweist: an einem Ende (4a) einen im Wesentlichen zugespitzten Abschnitt (27), der geeignet ist, in die Zugangsfläche getrieben zu werden, und am entgegengesetzten Ende (4b) einen verbundenen Abschnitt (28) mit einer Mittennut (29), die das zweite Ende (11b) der geformten Streifen (11) teilweise aufnimmt und zwei entgegengesetzte und voneinander beabstandete vorstehende Flügel (30, 31) bildet.

13. Einhakbauteil (1) nach Anspruch 12, **dadurch gekennzeichnet, dass** die vorstehenden Flügel (30, 31) ein oder mehrere zweite Querdurchgangslöcher haben, die mit den ersten Querdurchgangslöchern koaxial sind und in die der Hilfszapfen (26) eingeführt ist, was die Wirkkörper (4) mit den geformten Streifen (11) so vereinigt, dass die Nabe des Hilfszapfens (26) in der Mittennut (29) untergebracht ist.

14. Einhakbauteil (1) nach einem der Ansprüche 2 bis 13, **dadurch gekennzeichnet, dass** die Stützgruppe (2) aufweist:
eine erste (32) und eine zu ihr weisende und von ihr beabstandete zweite Auflagerplatte (33), die über stoßdämpfende Einrichtungen (34) miteinander verbunden sind;
eine Dreheinrichtung (35), die mit einer oberen Wand (32a) der ersten Auflagerplatte (32) über eine erste Verankerungseinrichtung (36) verbunden ist;
einen Klemmanschluss (37), der geeignet ist, an der Stützauflage (P) des Luftfahrzeugs außen angebracht und mit der Dreheinrichtung (35) über eine zweite Verankerungseinrichtung (38) gekoppelt zu sein.

15. Einhakbauteil (1) nach einem der Ansprüche 1 bis 14, **dadurch gekennzeichnet, dass** es eine selbstzentrierende Positioniereinrichtung (55) aufweist, die über der Greifanordnung (3) platziert ist, mit der sie fest gekoppelt ist, und die geeignet ist, dass sich die Greifanordnung (3) schnell an die Konfiguration der Zugangsfläche (G) anpassen kann, mit der sie in Kontakt kommt, was zur Verstärkung der Sicherheitsbedingungen beim Landen des Luftfahrzeugs auf der Zugangsfläche (G) beiträgt, wobei die selbstzentrierende Positioniereinrichtung (55) eine mechanische Epizykloiden- oder Planetenstruktur aufweist, die aus mehreren miteinander komplanaren Leerlaufscheiben (56, 57) mit sich voneinander unterscheidenden Drehmitten besteht, um eine unabhängig von der anderen zu drehen, die über der Stoßplatte (6) platziert und durch einen Ringsitz (58) voneinander beabstandet sind, in dem erste frei rollende Einrichtungen untergebracht sind.

## Revendications

1. Organe d'accrochage (1) pour faciliter l'atterrissage d'un aéronef sur une surface d'accès (G) comprenant un groupe de support (2) approprié pour être placé en saillie par rapport à des plots de support (P) dudit aéronef auquel il est couplé, ledit organe d'accrochage (1) comportant :
- un ensemble de prise (3), couplé audit groupe de support (2), qui comprend une pluralité de corps fonctionnels (4) en saillie et orientés vers le bas, une plaque de butée (6) placée à proximité et en regard dudit groupe de support (2), une plaque de support (7) espacée de ladite plaque de butée (6), de telle sorte que lesdites plaques (6, 7) définissent des plans de référence distincts et parallèles entre eux ; une broche centrale façonnée (8) définissant un axe de symétrie longitudinal (Y) orthogonal auxdits plans de référence desdites plaques (6, 7) et passant à travers un premier trou débouchant central (9), formé dans ladite plaque de support (7), depuis lequel elle reste en saillie en position inférieure dans toute position prise par lesdits corps fonctionnels (4), et à travers un deuxième trou débouchant central (10), formé dans ladite plaque de butée (6) et coaxial audit premier trou débouchant (9), et une pluralité de bandes façonnées (11) coopérant d'un côté avec ladite broche centrale façonnée (8) ;
- des moyens d'actionnement (5), connectés en liaison fonctionnelle avec lesdits corps fonctionnels (4) dudit ensemble de prise (3), afin de les déplacer depuis/vers une position de repos vers/depuis une position de fonctionnement dans laquelle lesdits corps fonctionnels (4) interfèrent avec lesdites surfaces d'accès (G), de façon à pénétrer au moins partiellement dans ladite surface d'accès (G) et à être lié de manière ferme mais amovible à ladite surface d'accès (G), ce qui augmente les conditions de sécurité pendant l'atterrissage dudit aéronef sur ladite surface d'accès (G), **caractérisé en ce que** chaque bande façonnée (11) est couplée à pivotement, de l'autre côté, à l'un desdits corps fonctionnels (4) et à la face supérieure (7a) de ladite plaque de support (7) via des moyens de fixation (12), et **en ce que** lesdits corps fonctionnels (4) restent en suspension libre dans ladite position de repos.

2. Organe d'accrochage (1) selon la revendication 1, **caractérisé en ce que** lesdits moyens d'actionnement (5) sont configurés pour mettre lesdits corps fonctionnels (4) en rotation autour d'un axe de rotation longitudinal (Z) afin de les déplacer depuis/vers ladite position de repos vers/depuis ladite position de fonctionnement.

3. Organe d'accrochage (1) selon la revendication 1, **caractérisé en ce que** chacun desdits corps fonctionnels (4) fait, dans toute position, partiellement saillie de la face inférieure (7b) de ladite plaque de support (7) en passant à travers une pluralité de trous débouchants périphériques (13) formés dans ladite plaque de support (7).

4. Organe d'accrochage (1) selon la revendication 1, **caractérisé en ce que** ledit ensemble de prise (3) comporte un manchon de connexion (14) qui connecte ladite plaque de butée (6) à ladite plaque de support (7), couplé à ladite plaque de support (7) au niveau dudit premier trou débouchant central (9) et à ladite plaque de butée (6) au niveau dudit deuxième trou débouchant central (10) de façon à être partiellement inséré dans ledit deuxième trou débouchant central (10) et à faire saillie par un tronçon terminal (15a) depuis la face supérieure (6a) de ladite plaque de butée (6).

5. Organe d'accrochage (1) selon la revendication 4, **caractérisé en ce que** lesdits moyens d'actionnement (5) sont placés en position inférieure près dudit groupe de support (2) et sont au moins partiellement contenus dans la chambre tubulaire (15) dudit manchon de connexion (14) et coopèrent avec ladite broche centrale façonnée (8) la faisant coulisser axialement.

6. Organe d'accrochage (1) selon la revendication 5, **caractérisé en ce que** lesdits moyens d'actionnement (5) sont au moins partiellement contenus dans une fente axiale (16) formée dans ladite broche centrale façonnée (8), ayant un orifice d'entrée (17) faisant face à ladite chambre tubulaire (15) dudit manchon de connexion (14).

7. Organe d'accrochage (1) selon au moins l'une des revendications 1 à 6, **caractérisé en ce que** lesdits moyens d'actionnement (5) comprennent un ressort à enroulement ou hélicoïdal (18) qui est en condition relâchée au moins dans ladite position de repos desdits corps fonctionnels (4) et qui se comprime lorsque l'appendice libre (19) de ladite broche centrale façonnée (8) entre en contact avec ou se détache de ladite surface d'accès (G).

8. Organe d'accrochage (1) selon les revendications 6 ou 7, **caractérisé en ce que** ladite broche centrale façonnée (8) a en section longitudinale un profil essentiellement en forme de Ω retourné et partiellement taillé en pointe, et est constituée dudit appendice libre (19), d'une partie centrale en forme de couronne (20) et d'une partie d'extrémité (21) ayant une section transversale réduite, opposée audit appendice libre (19) et délimitée par une paroi latérale (21a) connectée au moyen d'un tronçon convexe (22) avec la paroi latérale (20a) délimitant ladite partie centrale en forme de couronne (20).

9. Organe d'accrochage (1) selon au moins l'une des revendications 1 à 8, **caractérisé en ce que** lesdites bandes façonnées (11) ont, à une première extrémité (11a), un bord latéral concave (23) et, à une deuxième extrémité (11b), une ouverture débouchante définissant un axe coïncidant avec ledit axe longitudinal de rotation (Z).

10. Organe d'accrochage (1) selon l'une des revendications 1 à 9, **caractérisé en ce que** lesdites bandes façonnées (11) sont en nombre égal à celui desdits corps fonctionnels (4), une pour chacun desdits corps fonctionnels (4) avec lesquels elles sont couplées et coopèrent, et sont réparties uniformément autour de ladite broche centrale façonnée (8) entre ladite plaque de butée (6) et ladite plaque de support (7).

11. Organe d'accrochage (1) selon au moins l'une des revendications 1 à 10, **caractérisé en ce que** lesdits moyens de fixation (12) comprennent :
- une paire de pattes laminaires (24, 25) en regard et à distance l'une de l'autre, fixées à ladite face supérieure (7a) de ladite plaque de support (7), ayant à une première extrémité un ou plusieurs premiers trous débouchants transversaux coaxiaux entre eux ;
- au moins une broche auxiliaire (26) définissant ledit axe de rotation longitudinal (Z) et pourvue d'extrémités insérées dans lesdits premiers trous débouchants coaxiaux transversaux desdits pattes laminaires (24, 25).

12. Organe d'accrochage (1) selon la revendication 11, **caractérisé en ce que** chacun desdits corps fonctionnels (4) comprend à une extrémité (4a) une partie essentiellement pointue (27), appropriée pour être insérée dans ladite surface d'accès, et à l'extrémité opposée (4b), une partie liée (28) ayant une rainure centrale (29) qui reçoit partiellement ladite deuxième extrémité (11b) desdites bandes façonnées (11) et qui définit deux ailes saillantes (30, 31) en regard et à distance l'une de l'autre.

13. Organe d'accrochage (1) selon la revendication 12, **caractérisé en ce que** lesdites ailes saillantes (30, 31) ont un ou plusieurs deuxièmes trous débouchants transversaux, coaxiaux auxdits premiers trous débouchants transversaux et dans lesquels ladite broche auxiliaire (26) est insérée, rendant lesdits corps fonctionnels (4) solidaires desdites bandes façonnées (11), de telle manière que le moyeu de ladite broche auxiliaire (26) soit logée dans ladite rainure centrale (29).

14. Organe d'accrochage (1) selon au moins l'une des revendications 2 à 13, **caractérisé en ce que** ledit groupe de support (2) comprend :
- une première (32) et une deuxième (33) plaques porteuses en regard et espacées l'une de l'autre, connectées l'une à l'autre par des moyens absorbeurs de chocs (34) ;
- des moyens de rotation (35), liés à une paroi supérieure (32a) de ladite première plaque porteuse (32) via des premiers moyens d'ancrage (36) ;
- une extrémité de serrage (37), appropriée pour être appliquée par l'extérieur sur ledit plot de support (P) dudit aéronef et couplée auxdits moyens de rotation (35) via des deuxième moyens d'ancrage (38).

15. Organe d'accrochage (1) selon au moins l'une des revendications 1 à 14, **caractérisé en ce qu'**il comprend des moyens de positionnement à centrage automatique (55), placés au-dessus dudit ensemble de prise (3) avec lequel ils sont couplés fermement, appropriés pour permettre audit ensemble de prise (3) de s'adapter rapidement à la configuration de ladite surface d'accès (G) avec laquelle il entre en contact, contribuant à augmenter les conditions de sécurité pendant l'atterrissage dudit aéronef sur ladite surface d'accès (G), lesdits moyens de positionnement à centrage automatique (55) comprenant une structure mécanique épicycloïdale ou planétaire consistant en une pluralité de disques fous (56, 57) coplanaires entre eux, ayant des centres de rotation distincts les uns des autres, afin de tourner indépendamment les uns des autres, placés au-dessus de ladite plaque de butée (6) et espacés les uns des autres par un siège annulaire (58) dans lequel sont logés des premiers moyens de rotation libre.
